(19) Europäisches Patentamt
European Patent Office
Office européen des brevets

(11) **EP 1 052 493 A2**

(12) **EUROPEAN PATENT APPLICATION**

(43) Date of publication:
**15.11.2000 Bulletin 2000/46**

(51) Int. Cl.⁷: **G01M 3/36**

(21) Application number: **00303779.3**

(22) Date of filing: **05.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.05.1999 JP 12919099**
**18.04.2000 JP 2000116239**

(71) Applicants:
• **Ishida Co., Ltd.**
**Kyoto 606-8392 (JP)**

• **Showa Denko Plastic Products Co., Ltd.**
**Tokyo 105-8562 (JP)**

(72) Inventor:
**Iwasaki, Yoshio,**
**c/o Ishida Co., Ltd.**
**Ritto-cho, Kurita-gun, Shiga 520-3026 (JP)**

(74) Representative:
**Hucker, Charlotte Jane**
**Gill Jennings & Every**
**Broadgate House,**
**7 Eldon Street**
**London EC2M 7LH (GB)**

(54) **Container seal inspection method**

(57) Method to determine the quality of a seal of a sealed container in a short period of time in an accurate manner. The method includes a first step for measuring the position of a center portion of said lid in the height direction prior to said retort sterilization process; a second step for exposing said sealed container to a pressurized air at least once in said retort sterilization process; a third step for taking out said container from a retort autoclave after the second step and measuring the position of the center portion of said lid in the height direction which was measured in the first step; and a fourth step for determining the quality of seal from a result obtained by comparing the measured value obtained in the first step with the measured value obtained in the third step.

*Fig. 4*

EP 1 052 493 A2

**Description**

BACKGROUND OF THE INVENTION

Technical Field

The present invention relates to seal inspection methods. In particular, the present invention relates to a seal inspection method for inspecting seal quality of sealed containers having rigidity sufficient to maintain internal pressure, and having a head-space between what fills them and the lids.

Description of Related Art

Sealed containers are containers the inside of which is hermetically closed, after having been filled with contents, by sealing the lid member. In sealed containers of this type, sealing defects may be due to pinholes, defective seals, or fissures in scored portions. Accordingly, various non-destructive methods for inspecting the seal quality of sealed containers have been proposed in the past.

For example, Japanese Laid-Open Pat. App. No. 4-22835 discloses a method in which an airtight space is formed outside a sealed container lid and the airtight space is decompressed or pressurized to displace the lid. The seal quality is judged by measuring the amount by which the lid is displaced.

Also, U.S. Pat. No. 5,226,316 and Japanese Laid-Open Pat. App. No. 9-229813 disclose methods in which a sealed container is installed in a chamber, and the pressure within the chamber is made lower than the internal pressure of the sealed container. Deformation of the lid due to leakage of gas from inside the sealed container is measured to judge the quality of the seal.

In the above-mentioned conventional inspection methods, there are cases in which seal inspection (especially, leakage detection) cannot be carried out because of the viscosity or the amount of contents in a sealed container. For instance, if a pinhole is present in a container and the viscosity of the contents is high, the contents may block the pinhole and leakage cannot be detected accurately.

Consequently, under the present circumstances a method in which leaks are detected by human visual inspection after letting containers stand for two or three weeks has been generally adopted. This inspection method requires a long time for the inspection, and moreover space for storing the sealed containers is needed, making it quite inefficient.

SUMMARY OF THE INVENTION

An object of the present invention is to judge the sealing quality of sealed containers in a short period of time and moreover accurately.

As a result of their research efforts, the inventors in the present application discovered the following.

In the first place, blockage of pinholes by container contents arises when the internal pressure of the container is higher than the outside pressure and the contents come into contact with the pinhole and get pushed out through it. Meanwhile, if the outside pressure is higher than the internal pressure of the container, blockage will not occur even if the contents come into contact with the pinhole. And with there being gas such as air externally, the gas is much more likely to pass into the pinhole--the gas will readily invade. Accordingly, after placing a container having a pinhole into a chamber and leaving it under pressure higher than atmospheric pressure, when it is drawn out under external atmospheric pressure, swelling of the lid due to the pressure difference will be discovered.

Moreover, it was discovered that since a step in which a container is exposed to pressure higher than the internal pressure of the container is generally present in a retort sterilization process, executing that step can make inspection of the container sealing simultaneous with the retort sterilization process.

Herein, since air is to invade the container due to the container internal-external pressure difference, the container must possess sufficient rigidity to withstand the difference in pressure. Also, it is preferable that the container is made of a material having a coefficient of cubic expansion equal to, or larger than, that of a liquid food product constituting the contents of the container. The material is preferably a plastic having substantially the same coefficient of cubic expansion as that of the contents. Moreover, since it is subjected to a retort sterilization process, the material may be a polypropylene itself having heat resistance and high sanitary safety, or a composite made of polypropylene as a main component and a material having oxygen blocking properties, such as aluminum foil and ethylene-vinyl alcohol film. In the case of metal cans having a coefficient of cubic expansion smaller than that of their liquid content, the liquid content expands when heated to high temperatures during the retort sterilization process so as to compress the space between the lid and the contents. This raises the container internal pressure, making it difficult to generate a pressure difference with the container outer pressure.

Further, since air is to invade the container interiorly, a space between the lid and the contents is necessary. The larger the space, the greater the displacement of the lid, but from the rate that the container is to be filled with the contents, the space suitably is 5% or more, ordinarily 5 to 20% of the entire volume when container and the lid have been sealed.

In order to increase lid displacement, sealing the container desirably is carried out under atmospheric pressure or negative pressure between 0 and -500mm Hg, or by flushing vapor into the space to make the internal pressure of the space equivalent to, or under, atmospheric pressure when the container is sealed. If the internal pressure is higher than atmospheric pressure, the lid expands from the start, making it difficult to detect displacement.

The step of exposure to pressurized air during the retort sterilization process, if in a hot-water type retort, may be placed among the temperature-elevating/sterilizing/cooling steps, or either at the beginning or end of these steps. If in a steam-type retort, pressurized air blown in together with steam may be utilized to control pressure in the retort vessel during the sterilizing step in sterilizing/cooling. Or, a step of exposure to pressurized air only may be placed at the beginning or end of the sterilizing step. During exposure to pressurized air, the external pressure must be higher than the container internal pressure, which is inferred from the estimation equation below.

*Formula for Estimating Container Internal Pressure*

$$P = (P_0 - Pw_0) \times (V_0 / V) \times (T / T_0) + Pw$$

wherein

$P$: container internal pressure ($kg/cm^2_{absolute}$);
$P_0$: atmospheric pressure when filled ($kg/cm^2_{absolute}$);
$Pw_0$: vapor pressure when filled ($kg/cm^2_{absolute}$);
$V_0$: volume of space portion when filled (ml);
$V$: volume of space portion (ml) at temperature (°K) during retort process;
$T_0$: temperature (°K) when filled;
$T$: temperature (°K) during retort process; and
$Pw$: steam pressure ($kg/cm^2_{absolute}$) at temperature (°K) during retort process;

Incidentally, since the substantive expansion rate of polypropylene ($2.6 \times 10^{-4}$) and the substantive expansion rate of water ($2.1 \times 10^{-4}$) are roughly the same, ($V_0/V$) may be regarded to be 1.0.

The larger the container internal/external pressure difference, the more effective, as long as the container is not damaged, but normally 0.1 to 3.0 $kg/cm^2$ is suitable.

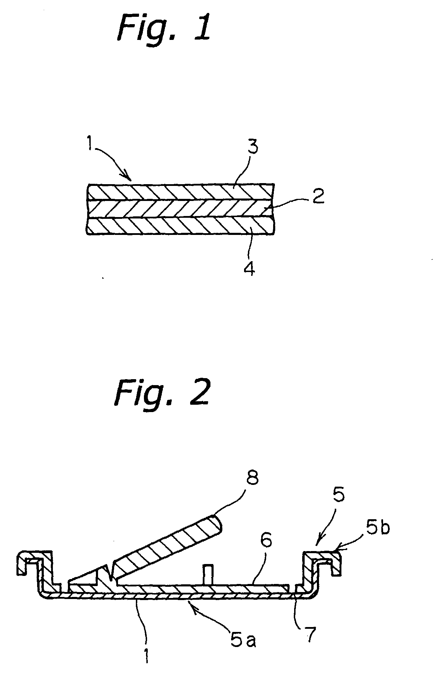

It is desirable that the sealed container be displaced partially, not entirely deformed or displaced. And measuring the displacement is desirably in the height direction of the container. To displace the container partially, a portion more sensitive to the container internal-external pressure difference than the rest preferably is provided on the section to be displaced. Accordingly, in general such a portion is preferably provided on the lid. Utilizing lid material in film form, as in a PET (12 μm)/ aluminum foil (9 μm)/cast polypropylene (CPP) (50 μm) example, heat-welded to the container opening, or an injection-molded plastic easy-open lid processed with a score line as shown in Fig. 2, and engage-welded to the container opening, is desirable. Because the portion on which the scored line 7 is formed is not injection plastic 6, but a thin film of polypropylene (PP) (30 μm)/aluminum foil (30 μm)/PP (30 μm), and is therefore not rigid, against a container internal-external pressure difference the lid will tend to be displaced from this portion.

The lid-position measurement in the container height direction may be made by gauging the distance to the lid with a general distance-triangulating system in which laser beam reflection is used. The portion for the displacement measurement is desirably the middle part of the lid, since displacement will be greatest in the middle part of the lid. Further, wherein aluminum foil or the like is utilizes as a barrier material in the lid, a sensor employing electromagnetic waves may be utilized.

From the following detailed description in conjunction with the accompanying drawings, the foregoing and other objects, features, aspects and advantages of the present invention will become readily apparent to those skilled in the art.

BRIEF DESCRIPTION OF THE DRAWINGS

Fig. 1 is a sectional view of base materials forming a lid;
Fig. 2 is a sectional view of a lid;
Fig. 3 is a plan view of the lid;
Fig. 4 is a sectional view of a container;
Fig. 5 is a diagram illustrating a curve and steps in a steam-type retort; and
Fig. 6 is a diagram illustrating a curve and steps in a hot-water, recovery-type retort.

DETAILED DESCRIPTION OF THE PREFERRED EMBODIMENTS

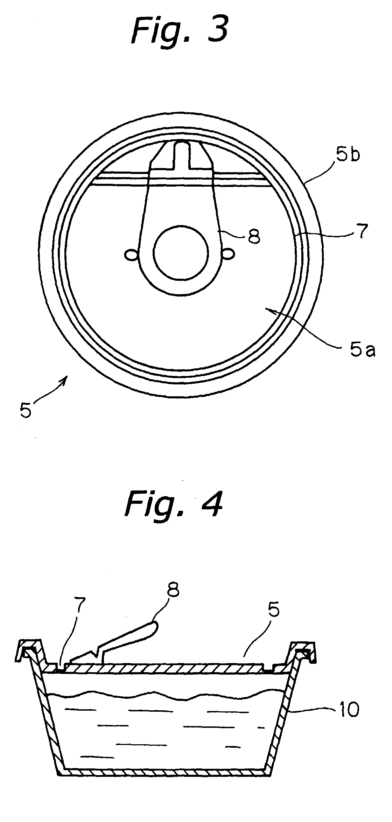

Figs. 2 and 3 are diagrams showing, respectively, a cross-sectional view and a plan view of a lid used in this embodiment. Also, Fig. 1 is a diagram showing an enlarged cross-sectional view of materials used for the lid.

A lid 5 includes a circular panel portion 5a and a peripheral portion 5b thereof. The peripheral portion 5b protrudes in the upward direction from an outer circumferential portion of the panel portion 5a. Also, the panel portion 5a and the peripheral portion 5b include a gas barrier member 1 and the injection plastic 6 formed on the upper surface of the member 1. Moreover, the scored line 7 which is an annular groove is formed at a boundary portion of the panel portion 5a and the peripheral portion 5b. Further, an opening portion 8 for opening the container is disposed on the panel portion 5a.

Embodiment 1

The gas barrier base material 1 was composed of PP3 (30 μm)/aluminum foil 2 (30 μm)/PP (30 μm) 4. This gas barrier base material 1 was inserted in a metal injection mold, into which polypropylene resin was injection-molded to prepare a plastic easy-open lid as shown in Fig. 2. The scored line 7 of this lid had a width of 0.2 mm, and a thickness (i.e., thickness of the portion of the lid after the formation of the scored line thereon) of 90 μm. The thickness of the panel 5a inside the scored line 7 was 0.8 mm including the gas barrier member 1.

Meanwhile, a body portion 10 (refer to Fig. 4) having an opening diameter of 68 mm, a bottom diameter of 62 mm, a height of 32 mm, and a thickness of the side wall and bottom, respectively, of 1.0 mm was formed by injecting a polypropylene resin in another mold for a body portion.

The entire volume of the body portion 10 when capped by the lid 5 was 87 ml. As shown in Fig. 4, cream of corn soup (having a viscosity of about 500 centipoises) 78g was filled in the body portion 10 so that a space portion between the soup and the lid 5 occupied 10% of the entire volume. After that the lid 5 was subjected to a high frequency sealing process under atmospheric pressure to produce a good sample. The temperature of the contents was 20 °C.

Meanwhile, comparative samples were produced by using the same method as above except that a tungsten wire of diameter ∅ 100 μm and ∅ 200 μm was placed between the opening of the body portion and the lid. These wires were pulled out after the high frequency sealing process to produce comparative samples 1 and 2 having a pinhole of ∅ 100 μm and ∅ 200 μm, respectively. Note that these pinholes may be formed in a scored portion.

Subject samples and samples 1 and 2 thus prepared, were housed into an autoclave for retort-packaged foods (Tommy Seiko Co., SR-240) and a steam-type retort process was carried out.

*Retort Conditions*

Steam type; stationary; sterilization temperature, 115 °C; sterilization time, 40 min.; cooling time, 15 min.; autoclave pressure, 2.3 kg/cm$^2$.

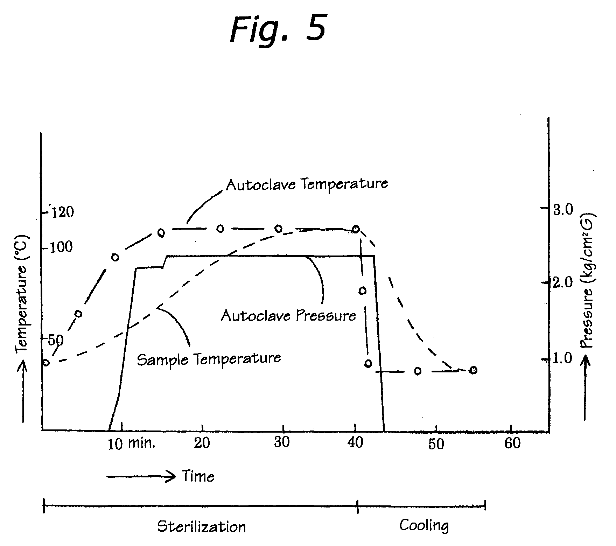

The retorting curve and steps therein are shown in Fig. 5. The subject samples and samples 1 and 2 were housed into a tank into which steam was sent, and sterilized at 115 °C (sterilization step). The steam of 115 °C and 0.7 kg/cm$^2$G was mixed with a pressurized air of 0.6 kg cm$^2$G and the total pressure of the tank was controlled to be 2.3 kg/cm$^2$G. At the initial stage of the sterilization process, since the temperature of the contents was 20 °C, the internal pressure of the container was equal to atmospheric pressure (0kg/cm$^2$G) and the pressure outside the container was 2.3 kg/cm$^2$G. Accordingly, air at 0.6 kg/cm$^2$G and steam at 0.7 kg/cm$^2$G entered into the container through the pinhole due to the pressure difference between inside and outside the container. Since the steam, after entering into the container, was condensed to be water, the pressure of the space portion was further decreased and, hence, more air and steam entered into the container. At the last stage of the sterilization process, since the temperature of the contents had been increased to 115 °C, the pressure of the space portion, which had been filled with the steam pressure of 0.7 kg/cm$^2$G and the air pressure of 0.6 kg/cm$^2$G, reached to 2.3 kg/cm$^2$G to maintain the balance with respect to the pressure outside the container.

Then, after cooling down to 30 °C by a cooling process, the samples were taken out of the autoclave and left under atmospheric pressure (0 kg/cm$^2$G). At that time, due to the pressure of 0.3 kg/cm$^2$G of the space portion inside the container after cooling, the lid expanded from the scored line which has no rigidity. The position of the center of the lid of each sample which had been subjected to the above-mentioned retort processes was measured by using a laser displacement measure (Sanks Co., LM10-50). Results are shown in Table I.

| TABLE I: Items/Displacement Amount | | | |
|---|---|---|---|
| Items | Subject Samples (non-defective items) | Samples 1 (100 $\mu$m) | Samples 2 (200 $\mu$m) |
| Displacement Amount ($\mu$m) | -0.1, 0.0, 0.1, 0.1, 0.2  $\tilde{x} = 0.06$ | 1.8, 1.8, 2.0, 2.5, 2.6  $\tilde{x} = 2.14$ | 1.8, 2.1, 2.3, 2.5, 2.7  $\tilde{x} = 2.28$ |

The values in Table II were measured based on the position of the lid before the retort processes which was considered to be zero. The values are expressed as (-) when the container was in a concave state and (+) when it was in a convex state. Also, as for an initial position of the center portion of the lid, more than 10 good samples were measured immediately after the retort processes and the average thereof was used as a standard value. This standard value may be measured prior to the retort processes.

As is obvious from Table 1, although almost no displacement in the position of the lid was generated for the good samples as compared with the ones prior to the retort processes, all of the samples 1 and 2 were deformed to be the convex shape and it is apparently possible to distinguish them as inferior samples.

Embodiment 2

Subject samples (non-defective articles), samples 3 (100 $\mu$m pinhole), and samples 4 (200 $\mu$m pinhole) were made using the same lid 5 and the body portion 10 as in Embodiment 1 and the same procedure as in the Embodiment 1 except that meat source (having viscosity of about 2,000 centipoises) 78g was used as the contents. Note that the high frequency sealing process for the lid and the body portion was carried out under -200mm Hg. The lid had a concave shape indicating a negative pressure. These good samples and samples 3 and 4 produced by the above-mentioned method were placed in the autoclave for retort foods (Tommy Seiko Co., SR-240) and subjected to steam type retort processes.

*Retort Conditions*

Steam type; stationary; sterilization temperature, 115 °C; sterilization time, 40 min.; cooling time, 15 min.; autoclave pressure, 2.3 kg/cm$^2$.

The retorting curve and steps therein are shown in Fig. 5. The subject samples and samples 3 and 4 were housed into a tank into which steam was sent, and sterilized at 115 °C (sterilization step). Steam at 115 °C and 0.7 kg/cm$^2$G was mixed with a pressurized air at 0.6 kg/cm$^2$G and the total pressure of the tank was controlled to be 2.3 kg/cm$^2$G. At the initial stage of the sterilization process, since the temperature of the contents was 20 °C, the internal pressure of the container was equal to atmospheric pressure (0kg/cm$^2$G) and the pressure outside the container was 2.3 kg/cm$^2$G. Accordingly, air at 0.6 kg/cm$^2$G and steam at 0.7 kg/cm$^2$G entered into the container through the pinhole due to the pressure difference between inside and outside the container. Since the steam, after entering into the container, was condensed to be water, the pressure of the space portion was further decreased and, hence, more air and steam entered into the container. At the last stage of the sterilization process, since the temperature of the contents had been increased to 115 °C, the pressure of the space portion, which had been filled with the steam pressure of 0.7 kg/cm$^2$G and the air pressure of 0.6 kg/cm$^2$G, reached to 2.3 kg/cm$^2$G to maintain the balance with respect to the pressure outside the container.

Then, after cooling down to 30 °C by a cooling process, the samples were taken out of the autoclave and left under atmospheric pressure (0kg/cm$^2$G). At that time, due to the pressure of 0.3 kg/cm$^2$G of the space portion inside the container after cooling, the lid expanded from the scored line which has no rigidity. The position of the center of the lid of each sample which had been subjected to the above-mentioned retort processes was measured by using a laser displacement measure (Sanks Co., LM10-50). Results are shown in Table II.

| TABLE II: Items/Displacement Amount | | | |
|---|---|---|---|
| Items | Subject Samples (non-defective items) | Samples 1 (100 $\mu$m) | Samples 2 (200 $\mu$m) |
| Displacement Amount ( $\mu$m) | -0.1, 0.0, 0.0, 0.2, 0.2 $\tilde{x}$ = 0.06 | 3.5, 3.5, 4.0, 4.5, 4.5 $\tilde{x}$ = 4.0 | 3.5, 3.8, 4.1, 4.5, 4.8 $\tilde{x}$ = 4.1 |

The values in Table II were measured based on the position of the lid before the retort processes which was considered to be zero. The values are expressed as (-) when the container was in a concave state and (+) when it was in a convex state.

As is obvious from Table II, although almost no displacement in the position of the lid was generated for the good samples as compared with the ones prior to the retort processes, all of the samples 3 and 4 were deformed to be the convex shape and it is apparently possible to distinguish them as inferior samples. Note that the reason why the values are greater than those obtained in Embodiment 1 is because the sealing process was carried out under -200mm Hg. In this case, a detection of an inferior sample becomes easier due to the increased degree of displacement which is caused because the displacement is started from the negative pressure, concave shape of the lid prior to the retort processes.

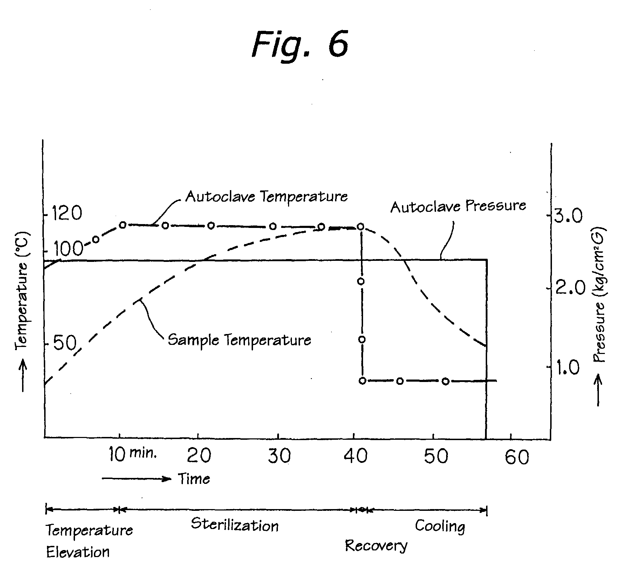

As an embodiment other than the above-mentioned embodiments, a similar phenomenon can be observed in cases where the retort type is a steam - rotation type. Also, the same can be said for cases in which a constant pressurization control is carried out in a hot water - standing - recovery type retort process. A retort curve of the hot water - recovery type is shown in Fig. 6. A process in which a container is exposed to a pressurized air is present in a hot water recovery process performed immediately before a cooling process, and the pressurized air enters a space portion through a pinhole due to the difference in pressure between inside and outside the container. A generation of displacement similar to the ones in Embodiments-1 and 2 was confined at the end of the retort process.

Other Embodiments

(a) There are possibly two ways to obtain the degree of displacement of the center portion of a lid of a container to be subjected to retort processes. One is to measure the position before and after the retort processes and calculated the degree of displacement from the difference between the two. The other is to measure a good sample after the retort processes to determine a determination standard, and determines the quality of a container based on the determination standard.
(b) In retort processes, if a container is placed upside down, the displacement indicating a poor quality appears more conspicuously. That is, air once entered a container being subjected to the pressurized air during the retort processes may not escape during a pressure releasing process since the container is placed upside down and the contents thereof block exits of the air and, hence, the deformed state of the container may be easily maintained.

This will be described in detail as follows.

First of all, since the container is placed upside down at the start of the retort processes, the contents of the container are in a state making contact with the lid. In this state, when a heat is applied during the retort process, the temperature of the contents is increased and the viscosity thereof is reduced. Then, due to a balance of the pressure between inside and outside, the pressurized air and vapor enter the container through a pinhole and the pressure inside the container reaches an equilibrium with the pressure inside the autoclave used for the retort processes.

Then, upon entering into a cooling process, the temperature and the pressure inside the retort autoclave are decreased and, with a little time delay, the pressure inside the container is also decreased. At that time, the pressurized air and the vapor can not push out the contents and escape outside the container. This is due to the following reasons. That is, when these enter to the inside of the container, the viscosity of the contents are decreased due to a high temperature of the retort processes and, hence, the situation is easier for the pressurized air and the vapor to intrude. Also, they are easy to intrude from a view point of the size of the air molecule and that of the vapor molecule. Compare to this, during the cooling process, the pressurized air and the vapor cannot push out the contents and escape outside the container. The contents must be pushed out prior to that to happen. Due to its physical size, the contents are hardly discharged through a pinhole. Also, since the viscosity of the contents is increased during the cooling process, they acts as a plug for closing the pinhole and creates a situation where the air and the vapor inside the container are more difficult to escape to outside. Accordingly, once the pressurized air and the vapor enter the container, they are not discharged and the container is expanded.

When the container is not placed upside down during the retort processes, on the other hand, since an air layer is located at the top and the effect of the contents hardly appears, any changes are difficult to be observed.

As described above, according to the present invention, a seal of a container may be easily inspected by exposing the container to be subjected to a retort sterilization process after being sealed to a pressurized air at least once in the retort sterilization process, and measuring a displacement of a center portion of a lid of the container in the height direction after the container was taken out of a retort autoclave.

While only selected embodiments have been chosen to illustrate the present invention, to those skilled in the art it will be apparent from this disclosure that various changes and modifications can be made herein without departing from the scope of the invention as defined in the appended claims. Furthermore, the foregoing description of the embodiments according to the present invention is provided for illustration only, and not for the purpose of limiting the invention as defined by the appended claims and their equivalents.

**Claims**

1. A container seal inspection method for inspecting the seal quality of a sealed container comprising a body and, sealed thereto, a lid, the container having sufficient rigidity to maintain internal pressure and having a space between the container contents and the lid, the method including:

   a first step of exposing the sealed container in a retort vessel to pressurized air during a retort sterilization process;
   a second step of removing the container from the retort vessel after said first step, and measuring the position of a mid-portion of the lid in the height-direction of the container; and
   a third step of comparing the measured position of the lid obtained in said second step with a quality determination standard position for the mid-portion of the lid in the height direction of the container, and determining the quality of the seal form the results of the comparison.

2. A container seal inspection method according to claim 1, wherein the quality determination standard position for the mid-portion of the lid in the height direction is a value obtained from a measurement in a prior step to said first step.

3. A container seal inspection method according to claim 1, wherein the quality determination standard position for the mid-portion of the lid in the height direction is a gauging value obtained after said first step by gauging the lid mid-portion position of a non-defective item in its height direction.

4. A container seal inspection method according to any preceding claim, wherein the retort sterilization process includes temperature-elevating, sterilization, and cooling steps, and said first step is carried out between those steps.

**5.** A container seal inspection method according to any of claims 1 to 3, wherein the retort sterilization process includes temperature-elevating, sterilization, and cooling steps, and said first step is carried out at a time selected from: the beginning of the overall process; the end of the overall process; the beginning of one of the steps; and the end of one of the steps.

**6.** A container seal inspection method according to any preceding claim, wherein the internal retort vessel pressure in said first step is higher than the internal pressure of the container placed in the retort vessel during said first step.

**7.** A container seal inspection method according to any preceding claim, wherein sealing of the container is carried out under atmospheric pressure.

**8.** A container seal inspection method according to any of claims 1 to 6, wherein sealing of the container is carried out under negative pressure between 0 and -500 mm Hg.

**9.** A container seal inspection method according to any preceding claim, wherein sealing of the container is carried out by vapor-flushing.

**10.** A container seal inspection method according to any preceding claim, wherein the lid mid-portion position in the height direction is measured using reflection of a laser beam.

**11.** A container seal inspection method according to any of claims 1 to 9, wherein the lid mid-portion position in the height direction is measured using reflection of electromagnetic waves.

**12.** A container seal inspection method according to any preceding claim, wherein the container consists solely of a thermoplastic having a substantive expansion coefficient which approximates to the substantive coefficient of expansion of a liquid food contained within the container.

**13.** A container seal inspection method according to any of claims 1 to 11, wherein the container consists of a thermoplastic plastic compounded with other elements, and having a substantive expansion coefficient which approximates to the substantive coefficient of expansion of a liquid food contained within the container.

**14.** A container seal inspection method according to any preceding claim, wherein during the retort sterilization process the container is positioned upside down in the retort vessel with the container lid forming the under side thereof.

# Fig. 1

# Fig. 2

# Fig. 3

# Fig. 4

# Fig. 5

## Fig. 6